# EUROPÄISCHE PATENTSCHRIFT

(11) **EP 4 087 765 B1**
(45) Veröffentlichungstag und Bekanntmachung des Hinweises auf die Patenterteilung: **25.10.2023**
(21) Anmeldenummer: 21708128.0
(22) Anmeldetag: 09.02.2021
(51) Int. Cl.: B61D 27/00

(54) **FAHRZEUG ZUR PERSONENBEFÖRDERUNG**
PASSENGER TRANSPORT VEHICLE
VÉHICULE DE TRANSPORT DE PASSAGERS

(30) Priorität: 12.03.2020 DE 102020203198
(43) Veröffentlichungstag der Anmeldung: 16.11.2022
(73) Patentinhaber: Siemens Mobility GmbH, 81739 München (DE)
(72) Erfinder: HILDEBRANDT, Alexander, 44789 Bochum (DE); KASAP, Irfan, 44653 Herne (DE)
(74) Vertreter: Siemens Patent Attorneys
(86) Internationale Anmeldenummer: PCT/EP2021/053089
(87) Internationale Veröffentlichungsnummer: WO 2021/180406

(56) Entgegenhaltungen:
- DE-U1-202015 101 374
- US-A1- 2018 117 986

## Beschreibung

Die Erfindung bezieht sich auf ein Fahrzeug zur Personenbeförderung nach dem Oberbegriff von Anspruch 1. Ein solches Fahrzeug ist beispielsweise durch die DE20 2025 101374 U1 bekannt.

Danach ist ein Fahrzeug zur Personenbeförderung bekannt, das mit einem Klimagerät ausgestattet ist, das einen mit einem Kältemittel betriebenen Kältekreis umfasst, wobei der Kältekreis einen Kondensator mit zugehörigem Kondensatorlüfter zum Fördern von Kühlluft und einen zu einem Luftbehandlerteil des Klimagerätes gehörenden Verdampfer zum Temperieren von mittels eines Zulüfters in einen Fahrgastinnenraum des Fahrzeugs geförderter Zuluft aufweist.

Beim Betrieb eines solchen Fahrzeugs kann es vorkommen, dass eine Leckage des Kältekreises des Klimagerätes auftritt, wodurch Kältemittel austreten kann. Insbesondere bei einer Leckage in unmittelbarer Nähe des Verdampfers würde austretendes Kältemittel sich mit der dort vorhandenen Zuluft vermischen und weiter in den Fahrgastinnenraum des Fahrzeugs gelangen. Dies ist für nicht gesundheitsschädliche Kältemittel ohne weiteres vertretbar.

Allerdings besteht Bedarf daran, auch alternative Kältemittel mit erhöhtem Risiko für die menschliche Gesundheit, wie beispielsweise R290 (Propan), in Klimageräten von Fahrzeugen zur Personenbeförderung, insbesondere Schienenfahrzeugen aber auch Bussen, einsetzen zu können. So sind beispielsweise auch Kältemittel bekannt, deren Einsatz mit einer erheblichen Explosions- oder Erstickungsgefahr verbunden sind. Vor diesem Hintergrund müssen Maßnahmen getroffen werden, um auf das Auftreten einer Leckage im Kältekreislauf zum Schutz von Fahrgästen zu reagieren.

Ausgehend hiervon liegt der Erfindung die Aufgabe zugrunde, das Fahrzeug der eingangs genannten Art derart weiterzuentwickeln, dass auch gesundheitlich riskante Kältemittel im Kältekreislauf einsetzbar werden.

Diese Aufgabe wird bei dem eingangs genannten Fahrzeug gelöst durch die Merkmale des Anspruchs 1.

Dabei zeichnet sich das Fahrzeug dadurch aus, dass innerhalb des Klimagerätes ein Strömungskanal für die Kühlluft und ein Strömungskanal für die Zuluft durch eine gemeinsame Trennwand strömungstechnisch voneinander getrennt sind, die Trennwand eine verschließbare Entgasungseinrichtung aufweist, die zwischen einem geschlossenen Zustand für einen Normalbetrieb des Klimagerätes und einem geöffneten Zustand für einen Notbetrieb des Klimagerätes, bei dem die Entgasungseinrichtung den Strömungskanal für die Kühlluft und den Strömungskanal für die Zuluft unmittelbar strömungstechnisch miteinander verbindet, umschaltbar ist, und in dem mit der Zuluft beaufschlagten Bereich des Fahrzeugs ein Detektor für das Kältemittel vorgesehen ist, der mit der Entgasungseinrichtung derart signaltechnisch verbunden ist, dass er bei Erfassen des Kältemittels eine Betätigung der Entgasungseinrichtung zur Einnahme ihres geöffneten Zustands auslöst.

Im Notbetrieb des Klimagerätes wird somit durch die vorgesehene Steuereinrichtung eine strömungstechnische Verbindung zwischen dem Strömungskanal für die Kühlluft und dem Strömungskanal für die Zuluft hergestellt. Dabei ist es zu berücksichtigen, dass der Kondensatorlüfter für die Kühlluft typischer Weise größer dimensioniert ist als der Zulüfter, so dass der Kühlluft-Volumenstrom regelmäßig größer als der Zuluft-Volumenstrom ist. Insofern tritt im Bereich der Entgasungseinrichtung der Bernoulli-Effekt auf, was zu einem Ansaugen der sich in dem Zuluftkanal befindlichen Zuluft führt, welche im Leckagefall mit Kältemittel beaufschlagt ist.

Der Kondensatorlüfter, der die Kühlluft an dem Kondensator vorbeiführt und anschließend an die Umgebung abgibt, saugt somit auch über die geöffnete Entgasungseinrichtung in den Kühlluft-Strömungskanal einströmende Zuluft an. Im Ergebnis wird somit die mit Kältemittel beaufschlagte Zuluft mit Hilfe des Kondensatorlüfters an die Umgebung abgegeben.

Dieser Absaugvorgang kann dadurch unterstützt werden, dass auf die Betriebsweise des Zulüfters eingewirkt wird. Sofern dies ausreichend ist, kann der Zulüfter leidglich gedrosselt werden. Es ist jedoch bevorzugt, dass der Detektor mit dem Zulüfter derart signaltechnisch verbunden ist, dass er bei Erfassen des Kältemittels eine Abschaltung des Zulüfters auslöst.

Dabei ist zu berücksichtigen, dass die Vorgänge des Öffnens der Entgasungseinrichtung und des Abschaltens des Zulüfters zeitlich eng beieinander liegen oder zeitgleich sein können.

Zur Ausführung der strömungstechnischen Verbindungen zwischen dem Detektor einerseits und der Entgasungseinrichtung und dem Zulüfter andererseits sind verschiedene Varianten denkbar. Beispielsweise kann die signaltechnische Verbindung durch feste Verdrahtung ausgeführt sein, so dass die Erfassung des Kältemittels durch den Detektor ein z. B. binäres Signal generiert, welches mittel- oder unmittelbar die Entgasungseinrichtung öffnet und den Zulüfter abschaltet. Alternativ dazu ist auch denkbar, dass ein Ausgangssignal des Detektors, das bei Erfassen des Kältemittels in der Zuluft erzeugt wird, einer ggf. zentralen Fahrzeugsteuerung zugeleitet wird, welche wiederum das einkommende Signal auswertet und in eine Betätigung der Entgasungseinrichtung zur Einnahme ihres geöffneten Zustands und eine Abschaltung des Zulüfters umsetzt.

Vorteilhafter Weise ist der Detektor, bezogen auf die Strömungsrichtung der Zuluft, stromabwärts des Verdampfers des Kältekreises angeordnet. Insbesondere kann er sich innerhalb des Klimagerätes befinden. Alternativ dazu ist es möglich, dass der Detektor im oder auf dem Weg zum Fahrgastinnenraum, der mit der Zuluft beaufschlagt ist. Insbesondere kann der Detektor unmittelbar hinter einer Luftverteileinrichtung für die Zuluft angeordnet sein, d.h. an derjenigen Stelle, an der die Zuluft aus einem Hauptkanal auf nachgeordnete Kanalzweige verteilt wird. In dieser Weise lässt sich eine Leckage des Kältekreislaufs zuverlässig ermitteln.

Auch die Entgasungseinrichtung ist, bezogen auf die Strömungsrichtung der Zuluft, stromabwärts des Verdampfers des Kältekreises in der Trennwand angeordnet. Ihre Dimensionierung im Hinblick auf einen freien Öffnungsquerschnitt kann vom Fachmann in einfacher Weise vorgenommen werden.

Bevorzugt ist die Entgasungseinrichtung als Entgasungsklappe ausgebildet. Diese kann sowohl rund als auch rechteckig geformt sein.

Als Kältemittel kann bevorzugt Propan eingesetzt werden. Weitere Beispiele für einsetzbare Kältemittel sind solche, für die geeignete Detektoren verfügbar und die brennbar sind, beispielsweise Butan, R600A, R-281, usw..

Ein Ausführungsbeispiel der Erfindung wird nachfolgend unter Bezugnahme auf die Zeichnung noch näher erläutert. Es zeigen:
- Figur 1: eine schematische Darstellung eines Klimagerätes für ein Schienenfahrzeug,
- Figur 2: eine perspektivische Ansicht einer ersten Ausführungsform einer Entgasungsklappe zum Einsatz bei dem Klimagerät von Figur 1 und
- Figur 3: eine perspektivische Ansicht einer zweiten Ausführungsform einer Entgasungsklappe zum Einsatz bei dem Klimagerät von Figur 1.

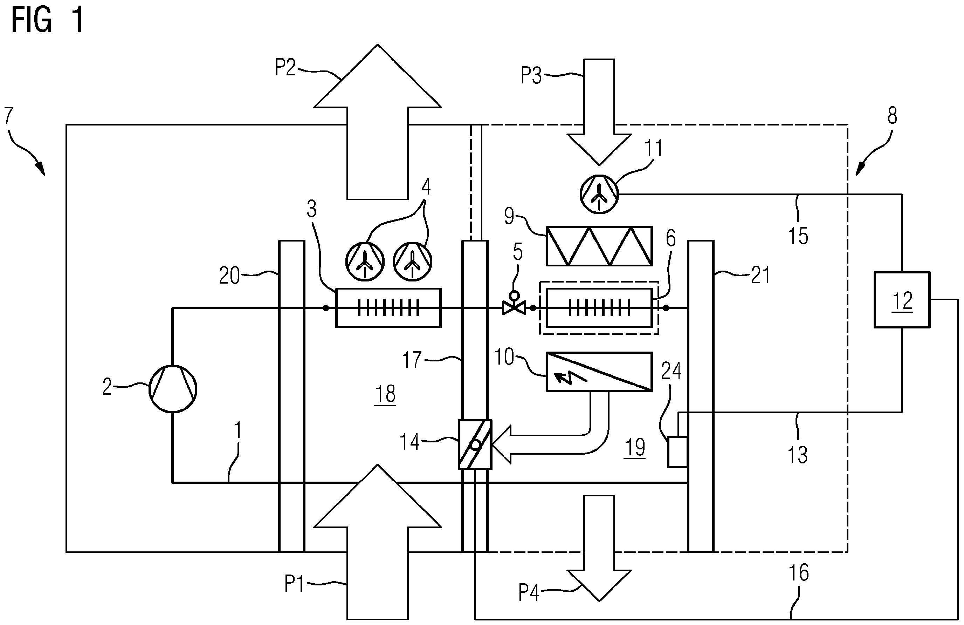

Wie Figur 1 zu entnehmen ist, weist ein Klimagerät zum Einsatz bei einem Schienenfahrzeug zur Personenbeförderung einen Kältekreis 1 mit einem Verdichter 2, einem Kondensator 3 mit zugehörigem Kondensatorlüfter 4, einem Expansionsventil 5 und einem Verdampfer 6 auf. Dabei ist das Klimagerät in einen Kondensatorteil 7 und einen Luftbehandlerteil 8 aufgeteilt. Im Kondensatorteil 7 saugt der Kondensatorlüfter 4, der im dargestellten Ausführungsbeispiel zwei Einzellüfter umfasst, aus der Fahrzeugumgebung Kühlluft an, die an dem Kondensator 3 vorbeigeführt wird, diesen entwärmt und sodann das Klimagerät in Richtung Umgebung wieder verlässt.

Der Luftbehandlerteil 8 umfasst neben dem Verdampfer 6 noch einen Luftfilter 9 und eine Nachheizeinrichtung 10. Ein Zulüfter 11 fördert zu konditionierende Luft durch das Luftfilter 9, am Verdampfer 6 entlang und durch die Nachheizeinrichtung 10, so dass stromabwärts der Nachheizeinrichtung 10 Zuluft mit gewünschter Konditionierung für einen Fahrgastinnenraum des Fahrzeugs vorliegt.

In Figur 1 veranschaulicht ein Pfeil P1 den Volumenstrom der mittels des Kondensatorlüfters 4 angesaugten Kühlluft (z. B. 14000 Kubikmeter/Stunde) vor Erreichen des Kondensators, ein Pfeil P2 den Volumenstrom der an die Umgebung abgegebenen Kühlluft, ein Pfeil P3 von dem Zulüfter angesaugte Luft (Abluft ggf. mit zugemischter Frischluft, z. B. ca. 3000 Kubikmeter/Stunde) und ein Pfeil P4 den Volumenstrom der in Richtung Fahrgastinnenraum über einen geeignetes Strömungskanalsystem eingeleiteten Zuluft.

Der Kältekreis 1 wird im vorliegenden Ausführungsbeispiel mit Propan betrieben, das bei einer Leckage des Kältekreises 1 erhöhte gesundheitliche Risiken für in dem Fahrgastinnenraum befindliche Personen mit sich bringt. Zum Feststellen einer Leckage des Kältekreises 1, insbesondere im Bereich des Luftbehandlerteils 8 ist, bezogen auf die Zuluft, stromabwärts des Verdampfers 6 ein Detektor 24 für Propan vorgesehen. Dieser Detektor 24 steht im dargestellten Ausführungsbeispiel mit einer Fahrzeugsteuereinrichtung 12 in einer signaltechnischen Verbindung, und zwar über eine Signalleitung 13. Der Detektor 24 signalisiert der Steuereinrichtung 12 das Erfassen von Propan in der zur Einleitung in den Fahrgastinnenraum vorgesehenen Zuluft. Die Steuereinrichtung 12 wertet dieses Signal aus und steuert sowohl den Zulüfter 6 als auch eine Entgasungsklappe 14 an, und zwar über Signalleitungen 15, 16.

Im Normalbetrieb des Klimagerätes ist die Entgasungsklappe 14, die ebenfalls stromabwärts des Verdampfers angeordnet ist, geschlossen, während sie sich in einem Notbetrieb des Klimagerätes, bei dem der Detektor 24 eine Leckage des Kältekreises 1 festgestellt hat, geöffnet wird.

Im geöffneten Zustand schafft die Entgasungsklappe 14 einen Durchlass in einer Trennwand 17, die einen Strömungskanal 18 für die Kühlluft von einem Strömungskanal 19 für die Zuluft trennt. Die jeweiligen Strömungskanäle 18, 19 für die Kühlluft und die Zuluft werden vervollständigt durch weitere Wände 20 (Kühlluft) und 21 (Zuluft). Somit bildet die Trennwand 17 mit der Wand 20 den Strömungskanal 18 für die Kühlluft aus, während die Wand 21 zusammen mit der Trennwand 17 den Strömungskanal 19 für die Zuluft festlegt und den Detektor 24 trägt.

Im Notbetrieb des Klimagerätes steuert die Steuereinrichtung 12 den Zulüfter 6 derart an, dass er ausreichend gedrosselt oder vollständig abgeschaltet wird, während die Entgasungsklappe 14 in ihre geöffneten Position gebracht wird. Insofern liegt nun in der Trennwand 17 ein Durchlass für Zuluft vor, die mit aufgrund der Leckage ausgetretenem Kältemittel verunreinigt ist. Der Kondensatorlüfter 4, der im Notbetrieb mit seiner maximalen Leistung betrieben sein kann, fördert in diesem Betriebszustand nicht nur die Kühlluft, sondern unter Ausnutzung des Bernoulli-Effektes auch aus dem Strömungskanal 19 die mit Kältemittel beaufschlagte Zuluft. Diese wird mittels des Kondensatorlüfters 4 an dem Kondensator 3 vorbeigeführt und an die Umgebung abgegeben. Insofern ist es möglich, den Strömungskanal 19 und damit sämtliche daran angrenzenden, Zuluft führenden Strömungskanäle mit Hilfe des Kondensatorlüfters 4 zu entleeren. In dieser Weise wird eine sichere Abführung der mit Kältemittel beaufschlagten Zuluft an die Umgebung ermöglicht, so dass eine Gefährdung für in dem Fahrgastinnenraum befindliche Personen wirksam vermindert werden kann.

Im Hinblick auf die Versorgung des Fahrgastinnenraums mit Frischluft besteht die Möglichkeit, über eine baubedingt vorhandene Fahrzeugleckage, z. B. Türen, Faltenbälge, etc., dem Fahrgastinnenraum Frischluft zuzuführen.

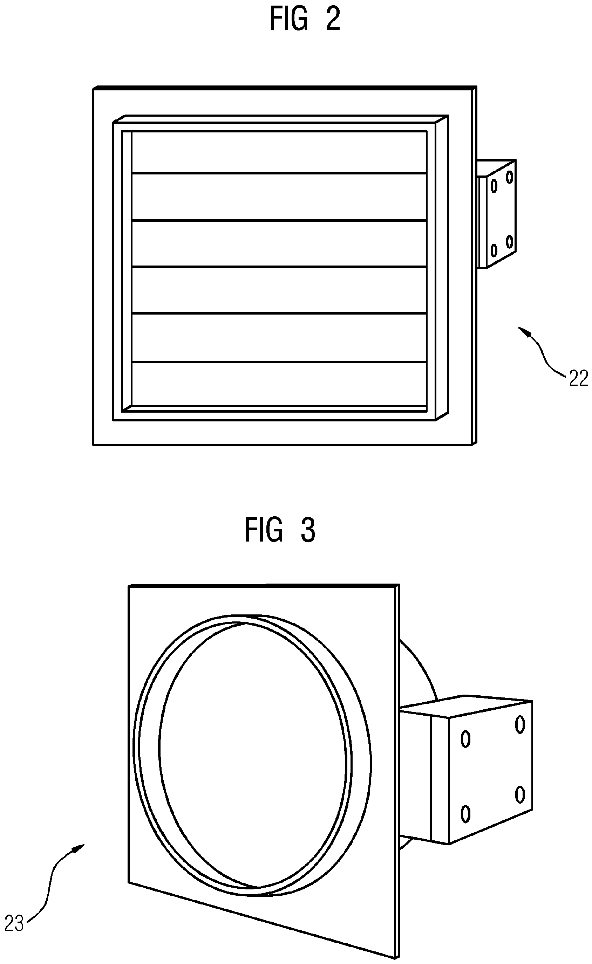

Figur 2 zeigt eine elektronisch steuerbare Entgasungsklappe 22 in eckiger Ausführung, während Figur 3 eine Entgasungsklappe 23 in runder Ausführung darstellt. Beiden Ausführungen ist gemeinsam, dass sie mit Hilfe der Steuereinrichtung 12 zwischen einer geschlossenen Position (Normalbetrieb des Klimagerätes) und einer geöffneten Position (Notbetrieb des Klimagerätes) umschaltbar sind.

## Patentansprüche

1. Fahrzeug zur Personenbeförderung, mit einem Klimagerät, das einen mit einem Kältemittel betriebenen Kältekreis (1) umfasst, wobei der Kältekreis (1) einen Kondensator (3) mit zugehörigem Kondensatorlüfter (4) zum Fördern von Kühlluft (20) und einen zu einem Luftbehandlerteil (8) des Klimagerätes gehörenden Verdampfer (6) zum Temperieren von mittels eines Zulüfters (11) in einen Fahrgastinnenraum des Fahrzeugs geförderter Zuluft aufweist, **dadurch gekennzeichnet, dass**
- innerhalb des Klimagerätes ein Strömungskanal (18) für die Kühlluft und ein Strömungskanal (19) für die Zuluft (21) durch eine gemeinsame Trennwand (17) strömungstechnisch voneinander getrennt sind,
- die Trennwand (17) eine verschließbare Entgasungseinrichtung (14; 22; 23) aufweist, die zwischen einem geschlossenen Zustand für einen Normalbetrieb des Klimagerätes und einem geöffneten Zustand für einen Notbetrieb des Klimagerätes, bei dem die Entgasungseinrichtung (14; 22; 23) den Strömungskanal (18) für die Kühlluft und den Strömungskanal (19) für die Zuluft unmittelbar strömungstechnisch miteinander verbindet, umschaltbar ist, und
- in dem mit der Zuluft beaufschlagten Bereich des Fahrzeugs ein Detektor (24) für das Kältemittel vorgesehen ist, der mit der Entgasungseinrichtung (14; 22; 23) derart signaltechnisch verbunden ist, dass er bei Erfassen des Kältemittels eine Betätigung der Entgasungseinrichtung (14; 22; 23) zur Einnahme ihres geöffneten Zustands auslöst.

2. Fahrzeug nach Anspruch 1,
**dadurch gekennzeichnet, dass**
der Detektor (24) mit dem Zulüfter (11) derart signaltechnisch verbunden ist, dass er bei Erfassen des Kältemittels eine Abschaltung des Zulüfters (11) auslöst.

3. Fahrzeug nach Anspruch 1 oder 2,
**dadurch gekennzeichnet, dass**
der Detektor (24), bezogen auf die Strömungsrichtung der Zuluft (21), stromabwärts des Verdampfers (6) des Kältekreises (1) angeordnet ist.

4. Fahrzeug nach einem der Ansprüche 1 bis 3,
**dadurch gekennzeichnet, dass**
der Detektor (24) im Fahrgastinnenraum angeordnet ist.

5. Fahrzeug nach einem der Ansprüche 1 bis 4,
**dadurch gekennzeichnet, dass**
die Entgasungseinrichtung (14; 22; 23), bezogen auf die Strömungsrichtung der Zuluft, stromabwärts des Verdampfers (6) des Kältekreises (1) in der Trennwand (17) angeordnet ist.

6. Fahrzeug nach einem der Ansprüche 1 bis 5,
**dadurch gekennzeichnet, dass**
die Entgasungseinrichtung (14; 22; 23) als Entgasungsklappe ausgebildet ist.

7. Fahrzeug nach einem der Ansprüche 1 bis 6,
**dadurch gekennzeichnet, dass**
das Kältemittel Propan ist.

8. Fahrzeug nach einem der Ansprüche 1 bis 7,
**dadurch gekennzeichnet, dass**
eine Steuereinheit vorgesehen ist, die mit dem Detektor (24) und/oder dem Zulüfter (11) signaltechnisch verbunden ist, und bei Erfassen des Kältemittels durch den Detektor (24) die Entgasungseinrichtung (14; 22; 23) betätigt.

## Claims

1. Passenger transport vehicle, having an air conditioning unit which comprises a refrigeration circuit (1) operated using a refrigerant, wherein the refrigeration circuit (1) has a condenser (3) with an associated condenser fan (4) for conveying cooling air (20), and an evaporator (6), which belongs to an air treatment part (8) of the air conditioning unit, for controlling the temperature of supply air which is conveyed by means of a supply air fan (11) into a passenger compartment of the vehicle,
**characterized in that**
- within the air conditioning unit, a flow channel (18) for the cooling air and a flow channel (19) for the supply air (21) are fluidically separated from one another by a common partition wall (17),
- the partition wall (17) has a closable degassing device (14; 22; 23) which can be switched between a closed state for normal operation of the air conditioning unit and an open state for emergency operation of the air conditioning unit, in which the degassing device (14; 22; 23) fluidically connects the flow channel (18) for the cooling air and the flow channel (19) for the supply air directly together, and
- in the region of the vehicle to which the supply air is admitted there is provided a detector (24) for the refrigerant which is connected via signals to the degassing device (14; 22; 23) such that, when it detects the refrigerant, it initiates actuation of the degassing device (14; 22; 23) so that the degassing device assumes its open state.

2. Vehicle according to Claim 1,
**characterized in that**
the detector (24) is connected via signals to the supply air fan (11) such that, when it detects the refrigerant, it initiates shutdown of the supply air fan (11).

3. Vehicle according to Claim 1 or 2,
**characterized in that**
the detector (24) is arranged downstream, based on the direction of flow of the supply air (21), of the evaporator (6) of the refrigeration circuit (1).

4. Vehicle according to one of Claims 1 to 3,
**characterized in that**
the detector (24) is arranged in the passenger compartment.

5. Vehicle according to one of Claims 1 to 4,
**characterized in that**
the degassing device (14; 22; 23) is arranged downstream, based on the direction of flow of the supply air, of the evaporator (6) of the refrigeration circuit (1), in the partition wall (17).

6. Vehicle according to one of Claims 1 to 5,
**characterized in that**
the degassing device (14; 22; 23) is in the form of a degassing flap.

7. Vehicle according to one of Claims 1 to 6,
**characterized in that**
the refrigerant is propane.

8. Vehicle according to one of Claims 1 to 7,
**characterized in that**
there is provided a control unit which is connected via signals to the detector (24) and/or to the supply air fan (11) and which, on detection of the refrigerant by the detector (24), actuates the degassing device (14; 22; 23).

## Revendications

1. Véhicule de transport de passagers, comprenant un appareil de conditionnement d'air, qui comprend un circuit (1) de froid fonctionnant par un réfrigérant, dans lequel le circuit (1) de froid a un condenseur (3) à ventilateur (4) de condenseur lui appartenant pour le transport d'air (20) de refroidissement et un évaporateur (6) appartenant à une partie (8) de traitement de l'air de l'appareil de conditionnement d'air pour la mise en température de l'air apporté, véhiculé au moyen d'un ventilateur (11) d'afflux dans un espace intérieur réservé aux passagers du véhicule, **caractérisé en ce que**
- à l'intérieur de l'appareil de conditionnement d'air, un conduit (18) d'écoulement de l'air de refroidissement et un conduit (19) d'écoulement de l'air (21) d'afflux sont séparés l'un de l'autre en technique d'écoulement par une cloison (17) commune,
- la cloison (17) a un dispositif (14 ; 22 ; 23) de dégazage pouvant être fermé, qui peut passer entre un état fermé pour un fonctionnement normal de l'appareil de conditionnement d'air et un état ouvert pour un fonctionnement d'urgence de de l'appareil de conditionnement d'air, dans lequel le dispositif (14 ; 22 ; 23) de dégazage met en communication en technique d'écoulement directement le conduit (18) d'écoulement de l'air de refroidissement et le conduit (19) d'écoulement de l'air d'afflux, et
- dans la partie alimentée par l'air d'afflux du véhicule, est prévu un détecteur (24) du réfrigérant, qui est relié en technique du signal au dispositif (14 ; 22 ; 23) de dégazage, de manière à déclencher, à la détection du réfrigérant, un actionnement du dispositif (14 ; 22 ; 23) de dégazage pour qu'il prenne l'état ouvert.

2. Véhicule suivant la revendication 1,
**caractérisé en ce que**
le détecteur (24) est relié au ventilateur (11) d'afflux en technique du signal, de manière à déclencher, à la détection du réfrigérant, un débranchement du ventilateur (11) d'afflux.

3. Véhicule suivant la revendication 1 ou 2,
**caractérisé en ce que**
le détecteur (24) est monté, rapporté au sens d'écoulement de l'air (21) d'afflux, en aval de l'évaporateur (6) du circuit (1) de froid.

4. Véhicule suivant l'une des revendications 1 à 3,
**caractérisé en ce que**
le détecteur (24) est disposé dans l'espace intérieur réservé aux passagers.

5. Véhicule suivant l'une des revendications 1 à 4,
**caractérisé en ce que**
le dispositif (14 ; 22 ; 23) de dégazage est monté dans le cloison (17), rapporté au sens d'écoulement de l'air d'afflux, en aval de l'évaporateur (6) du circuit (1) de froid.

6. Véhicule suivant l'une des revendications 1 à 5,
**caractérisé en ce que**
le dispositif (14 ; 22 ; 23) de dégazage est constitué en volet de dégazage.

7. Véhicule suivant l'une des revendications 1 à 6,
**caractérisé en ce que**
le réfrigérant est du propane.

8. Véhicule suivant l'une des revendications 1 à 7,
**caractérisé en ce qu'**
il est prévu un dispositif de commande, qui est relié en technique du signal au détecteur (24) et/ou au ventilateur (11) d'afflux et qui, à la détection du réfrigérant par le détecteur (24), actionne le dispositif (14 ; 22 ; 23) de dégazage.
